# EUROPÄISCHE PATENTSCHRIFT

(11) **EP 0 793 801 B1**
(45) Veröffentlichungstag und Bekanntmachung des Hinweises auf die Patenterteilung: **25.08.1999**
(21) Anmeldenummer: 95937763.1
(22) Anmeldetag: 15.11.1995
(51) Int. Cl.: G01L 9/00

(54) **DRUCKSENSOR**
PRESSURE SENSOR
DETECTEUR DE PRESSION

(30) Priorität: 24.11.1994 DE 4441903
(43) Veröffentlichungstag der Anmeldung: 10.09.1997
(73) Patentinhaber: SIEMENS AKTIENGESELLSCHAFT, 80333 München (DE)
(72) Erfinder: CATANESCU, Ralf, D-28201 Bremen (DE); SCHEITER, Thomas, D-80469 München (DE)
(86) Internationale Anmeldenummer: DE9501587
(87) Internationale Veröffentlichungsnummer: WO9616319

(56) Entgegenhaltungen:
- DE-A- 3 445 774
- US-A- 4 665 610

## Beschreibung

Die vorliegende Erfindung betrifft einen mikromechanisch herstellbaren kapazitiven Drucksensor.

Zur Messung von Absolutdruck werden kapazitive Drucksensoren eingesetzt. Eine geschlossene Kammer mit einem Bezugsdruck ist durch eine elastische Membran abgeschlossen, die einem äußeren Druck ausgesetzt ist. Die elektrisch leitende Membran bildet mit der gegenüberliegenden Seite dieser Kammer einen Plattenkondensator. Aufgrund der Druckdifferenz zwischen dem äußeren Druck und dem inneren Bezugsdruck wird die Membran verformt. Durch den geänderten Abstand zwischen der Membran und der als Gegenelektrode wirkenden Kammerrückseite ändert sich die Kapazität dieses Kondensators. Aus dieser Kapazitätsänderung läßt sich der außere Druck bestimmen.

In der US 5 095 401 von Paul M. Zavracky e.a. sind Drucksensoren auf SOI-Substrat beschrieben, bei denen ein Hohlraum hergestellt wird, indem ein mittels LOCOS hergestellter Bereich aus Siliziumoxid durch kleine Öffnungen in einer darauf aufgebrachten Schicht entfernt wird. Diese Öffnungen werden anschließend verschlossen durch Oxidation des angrenzenden Siliziums oder durch Aufbringen einer weiteren Schicht aus Siliziumnitrid, Polysilizium oder dgl. In dieser Patentschrift ist auch die Verwendung der dort angegebenen Herstellungsmethode zur Herstellung von kapazitiv messenden Drucksensoren beschrieben. Bestandteil der Membran dieses Drucksensors ist eine kristallisierte Siliziumschicht, die außerhalb des Drucksensors zur Integration von elektronischen Bauelementen und im Bereich der Membran zur Ausbildung von Piezowiderstanden verwendet wird.

Aufgabe der vorliegenden Erfindung ist es, einen mikromechanisch herstellbaren kapazitiven Drucksensor, bei dem das Problem einer nichtlinearen Abhängigkeit der Kapazität vom einwirkenden Druck beseitigt ist, und ein zugehöriges im Rahmen eines BiCMOS-Prozesses durchführbares Herstellungsverfahren anzugeben.

Diese Aufgabe wird mit dem Drucksensor mit den Merkmalen des Anspruches 1 und dem Herstellungsverfahren mit den Merkmalen des Anspruches 6 gelöst. Weitere Ausgestaltungen ergeben sich aus den jeweiligen abhängigen Ansprüchen.

Der erfindungsgemäße Drucksensor löst die gestellte Aufgabe dadurch, daß bei einer Änderung des einwirkenden äußeren Druckes durch elektrostatische Kompensation eine Bewegung der Membran unterbunden wird. Aus der Größe einer für diese elektrostatische Kompensation erforderlichen Spannung wird der Druck bestimmt. Weil die Membran nicht ausgelenkt wird, tritt keine Nichtlinearität auf. Es sind daher auch nicht eine besondere Strukturierung der Membran oder eine Beschränkung der maximal möglichen Membranauslenkung erforderlich. Die elektronische Auswertung der Meßsignale wird ebenfalls vereinfacht. Der erfindungsgemäße Aufbau in Oberflächen-Mikromechanik verwendet bei der Herstellung nur Prozeßschritte, die standardmäßig in einem BiCMOS-Prozeß vorhanden sind. Zusätzlich erforderliche Prozeßschritte, in denen Masken verwendet werden, können derart erfolgen, daß sie mit dem übrigen Prozeß weitestgehend kompatibel sind. Eine einfache gleichzeitige Realisierung von Sensorbauelementen und Schaltungskomponenten auf einem Chip ist daher möglich.

Die Funktionsweise des Drucksensors beruht auf elektrostatischer Kraftkompensation (Force Balancing Sensor, FBS). Hierbei dient nicht die Auslenkung der Membran als Maß für den Druck, sondern die Kraft, die nötig ist, um die Membran in der Ruhelage zu halten, und die indirekt aus der elektrischen Spannung bestimmt wird, die diese Kraft elektrostatisch hervorruft. Damit der Drucksensor bei höherem Druck als dem Bezugsdruck eingesetzt werden kann, ist es erforderlich, daß eine elektrostatische Kompensationskraft in der Richtung entgegengesetzt zum einwirkenden äußeren Druck an die Membran angreifen kann. Zu diesem Zweck ist die Membran elektrisch leitfähig ausgebildet, und es befindet sich auf der Außenseite des Drucksensors über der Membran eine durchbrochene Gegenelektrode.

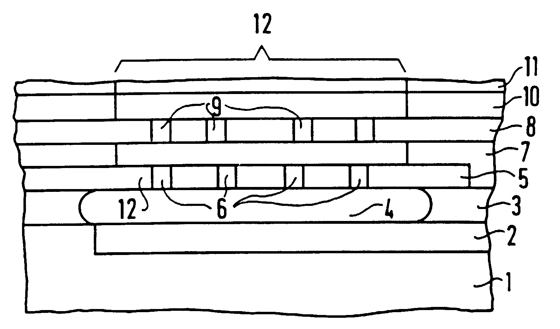

Es folgt eine genauere Beschreibung eines Ausführungsbeispieles des erfindungsgemäßen Drucksensors anhand des in der Figur dargestellten Querschnittes.

In der Figur sind dargestellt auf einem Substrat 1 mit einem an einer Oberseite ausgebildeten leitfähigen Bereich 2, der als untere Gegenelektrode vorgesehen ist, und mit einer Hilfsschicht 3, bei der es sich z. B. um einen mittels LOCOS bereichsweise oxidierten oberen Schichtanteil des Substrates 1 handeln kann, eine Membranschicht 5, eine Verschlußschicht 7, eine Elektrodenschicht 8 und weitere Schichten 10, 11. In der Hilfsschicht 3 befindet sich ein Hohlraum 4, der evakuiert ist oder mit Luft oder einem anderen Gas oder Gasgemisch,das unter dem Bezugsdruck steht, gefüllt ist. In der Membranschicht 5 befinden sich Aussparungen 6, die mit Material der im Bereich der Membran 12 entfernten Verschlußschicht 7 gefüllt sind. Zwischen der Membran 12 und der Elektrodenschicht 8 befindet sich ein Zwischenraum, der eine Auslenkung der Membran in beide Richtungen senkrecht zur Membranebene ermöglicht. Damit ein äußerer Druck auf die durch den über dem Hohlraum 4 befindlichen Anteil der Membranschicht 5 gebildete Membran 12 einwirken kann, befinden sich in der Elektrodenschicht 8 Aussparungen 9, die nicht verschlossen sind. Im Bereich der Membran 12 sind die oberhalb der Elektrodenschicht 8 vorhandenen weiteren Schichten 10, 11 entfernt.

Die Aussparungen 9 in der Elektrodenschicht 8 schneiden jeweils beide Grenzflächen der Elektrodenschicht 8 und sind so bemessen und so angeordnet, daß aufgrund einer Strömung durch diese Aussparungen 9 hindurch bei einer Änderung des äußeren Druckes sich diese Druckänderung in einer für den vorgesehenen Einsatz des Drucksensors ausreichend kurzen Zeit auch der Membran 12 mitteilt. Bei speziellen Ausführungsformen, die für eine Messung erhöhten Druckes vorgesehen sind, kann der dotierte Bereich 2 weggelassen sein. Die elektrischen Anschlüsse an die leitfähigen Schichten 5, 8 befinden sich seitlich und sind in der Figur nicht mit eingezeichnet. Kontakte auf dem leitfähigen Bereich 2, der Membranschicht 5 und der Elektrodenschicht 8 sind in der an sich bekannten Weise aufgebracht.

Bei der Herstellung dieses Drucksensors wird z. B. ein Substrat 1 aus Silizium verwendet. An einer Oberseite kann durch Eindiffusion von Dotierstoff der leitfähige Bereich 2 ausgebildet werden. Die Hilfsschicht 3 wird vorzugsweise durch lokale Oxidation des Siliziums mittels LOCOS hergestellt. Es kann aber statt dessen eine gesonderte Schicht als Hilfsschicht 3 aufgebracht werden. Für die Membranschicht 5 kann z. B. Polysilizium verwendet werden, das zusammen mit den Gate-Elektroden für gleichzeitig hergestellte MOSFETs aufgebracht und anschließend elektrisch leitend dotiert wird. Statt dessen kann für die Membranschicht 5 eine Metallschicht oder Schichtfolge aus verschiedenen Metallen verwendet werden, wie sie z. B. als Metallisierung für die Verdrahtung auf demselben Chip hergestellter elektronischer Schaltungen aufgebracht wird.

Mittels einer Lochmaske werden die Aussparungen 6 in der Membranschicht 5 hergestellt und durch diese Aussparungen 6 hindurch der Hohlraum 4 durch Ausätzen der Hilfsschicht 3 bzw. Entfernen des zuvor mittels LOCOS hergestellten Oxides hergestellt. Danach wird die Verschlußschicht 7 aufgebracht, bei der es sich z. B. um eine Planarisierungsschicht aus Dielektrikum handeln kann. Die Aussparungen 6 sind so bemessen, daß sie mit dem Material der Verschlußschicht 7 verschlossen werden, ohne daß dabei der Hohlraum 4 aufgefüllt wird. Auf die Verschlußschicht 7 wird dann die Elektrodenschicht 8 ganzflächig aufgebracht. Die Elektrodenschicht 8 kann zweckmäßig z. B. durch eine oder mehrere Metallschichten der für die elektrische Verdrahtung vorgesehenen Metallisierungsebenen gebildet werden.

Mit einer weiteren Maske werden die Aussparungen 9 in der Elektrodenschicht 8 hergestellt und durch diese Aussparungen 9 hindurch im Bereich der herzustellenden Membran 12 das Material der Verschlußschicht 7 von der Oberfläche der Membran entfernt. Dabei wird die Zeit des Ätzprozesses so begrenzt, daß die Aussparungen 6 in der Membranschicht 5 durch restliches Material der Verschlußschicht 7 verschlossen bleiben. Die weiteren Schichten 10, 11 sind z. B. Passivierungsschichten oder Isolationsschichten, die im Rahmen des Gesamtprozesses aufgebracht werden. Diese weiteren Schichten 10, 11 werden im Bereich der Membran 12 von der Oberseite der Elektrodenschicht 8 entfernt, wobei die Aussparungen 9 in der Elektrodenschicht 8 geöffnet werden. Falls die Verschlußschicht 7 nicht in einer für die für den vorgesehenen Meßbereich ausreichende Kapazität erforderlichen Dicke aufgebracht werden kann, kann zwischen der Verschlußschicht 7 und der Elektrodenschicht 8 eine weitere Schicht als Distanzschicht vorgesehen sein.

Eine Nichtlinearität der Kapazität als Funktion der Membranauslenkung geht bei diesem Drucksensor nicht in das Meßergebnis ein, wenn an die durch die Elektrodenschicht 8 gebildete Gegenelektrode oder ggf. an den im Substrat 1 ausgebildeten dotierten Bereich 2 eine elektrische Spannung zur Erzeugung einer elektrostatischen Rückstellkraft angelegt wird. Das Quadrat dieser angelegten Spannung ist proportional zum einwirkenden Druck (genauer: Druckdifferenz zwischen dem in dem Hohlraum 4 vorhandenen Druck und dem äußeren Druck). Auf diese Weise ergibt sich eine exakt definierte Abhängigkeit des Meßsignals von der zu messenden Druckdifferenz. Die bei herkömmlichen kapazitiven Drucksensoren auftretenden Nichtlinearitäten treten daher nicht auf und müssen nicht in aufwendiger Weise z. B. durch nachträgliche Auswertung in der elektronischen Schaltung eliminiert werden.

## Patentansprüche

1. Drucksensor als Halbleiterbauelement,
bei dem ein Hohlraum (4) vorhanden ist, der einseitig von einer im wesentlichen durch eine elektrisch leitfähige Membranschicht (5) gebildeten Membran (12) begrenzt ist,
bei dem auf der von der Membran abgewandten Seite des Hohlraumes (4) ein elektrisch leitfähig dotierter Bereich (2) vorhanden ist,
bei dem auf der von diesem Hohlraum (4) abgewandten Seite dieser Membran in einem Abstand zu dieser Membran eine elektrisch leitfähige Elektrodenschicht (8) vorhanden ist,
bei dem diese Elektrodenschicht (8) mit Öffnungen (9) durchbrochen ist,
bei dem diese Öffnungen (9) so beschaffen sind und diese Membran so verformbar ist, daß bei einer Veränderung eines in einem Medium auf der von diesem Hohlraum (4) abgewandten Seite dieser Elektrodenschicht (8) herrschenden Druckes innerhalb eines vorgegebenen Intervalles diejenige Änderung einer über elektrische Anschlüsse an diese Membranschicht (5) und diese Elektrodenschicht (8) oder diesen dotierten Bereich (2) angelegten elektrischen Spannung meßbar ist, die erforderlich ist, um elektrostatisch einer Verformung dieser Membran entgegenzuwirken, und
bei dem Kontakte für diese elektrischen Anschlüsse dieser Membranschicht (5), dieser Elektrodenschicht (8) und des dotierten Bereiches (2) vorhanden sind.

2. Drucksensor nach Anspruch 1,
bei dem in dieser Membranschicht (5) im Bereich dieser Membran (12) jeweils beide Oberflächen dieser Membranschicht (5) schneidende Aussparungen (6) vorhanden sind,
bei dem in diesen Aussparungen (6) Material einer auf die Membranschicht (5) aufgebrachten Verschlußschicht (7) eingebracht ist und
bei dem diese Verschlußschicht (7) die von dem Hohlraum (4) abgewandte Seite der Membran frei läßt.

3. Drucksensor nach einem der Ansprüche 1 oder 2,
bei dem die Membranschicht (5) Polysilizium ist.

4. Drucksensor nach einem der Ansprüche 1 oder 2,
bei dem die Membranschicht (5) Metall ist.

5. Drucksensor nach einem der Ansprüche 1 bis 4,
bei dem die Elektrodenschicht (8) durch eine oder mehrere Metallschichten gebildet ist.

6. Verfahren zum Herstellen eines Drucksensors nach einem der Ansprüche 1 bis 5 mit folgenden Schritten:
a) Eine für die Herstellung des Hohlraumes (4) vorgesehene Schicht (3) wird über einem dotierten Bereich (2) hergestellt und darauf die Membranschicht (5) aufgebracht;
b) mittels einer Maske werden Aussparungen (6) in einer für die nachfolgenden Schritte c) und d) bemessenen Größe in dieser Membranschicht (5) im Bereich der herzustellenden Membran hergestellt;
c) unter Verwendung dieser Aussparungen (6) wird ein Hohlraum (4) in der dafür vorgesehenen Schicht (3) ausgeätzt;
d) es wird eine Verschlußschicht (7) auf die Membranschicht (5) derart aufgebracht, daß die Aussparungen (6) verschlossen werden, ohne den Hohlraum (4) aufzufüllen;
e) es wird die Elektrodenschicht (8) aufgebracht und mit den Öffnungen (9) versehen;
f) unter Verwendung dieser Öffnungen (9) wird zwischen der Membranschicht (5) und der Elektrodenschicht (8) vorhandenes Material im Bereich der herzustellenden Membran weggeätzt, und die für das Anlegen einer elektrischen Spannung an die Membranschicht (5) und die Elektrodenschicht (8) erforderlichen Mittel werden hergestellt.

7. Verfahren nach Anspruch 6, bei dem
in Schritt a) die Membranschicht (5) aus Polysilizium hergestellt wird und
in einem nachfolgenden Schritt eine Implantierung von Dotierstoff erfolgt, um die Membranschicht (5) elektrisch leitfähig zu machen.

8. Verfahren nach Anspruch 6 oder 7, bei dem
zwischen den Schritten d) und e) eine Distanzschicht aufgebracht wird und
in Schritt f) diese Distanzschicht im Bereich der herzustellenden Membran weggeätzt wird.

## Claims

1. Pressure sensor as a semiconductor component, in which there is a hollow (4) which is bounded on one side by a diaphragm (12) formed essentially by an electrically conductive diaphragm layer (5), in which on the side of the hollow (4) averted from the diaphragm there is a region (2) which is doped in an electrically conductive fashion, in which there is an electrically conductive electrode layer (8) on the side, averted from this hollow (4), of this diaphragm at a distance from this diaphragm, in which this electrode layer (8) is pierced by holes (9), in which these openings (9) are of such a nature, and this diaphragm can be deformed such that in the event that within a prescribed interval there is a change in a pressure prevailing in a medium on the side, averted from this hollow (4), of this electrode layer (8), it is possible to measure that change in a voltage, applied via electrical terminals to this diaphragm layer (5) and this electrode layer (8) or this doped region (2), which is required to counteract a deformation of this diaphragm in an electrostatic fashion, and in which there are contacts for these electrical terminals of this diaphragm layer (5), of this electrode layer (8) and of the doped region (2).

2. Pressure sensor according to Claim 1, in which there are recesses (6) in this diaphragm layer (5) in the region of this diaphragm (12) which in each case pierce both surfaces of this diaphragm layer (5), in which material of a sealing layer (7) applied to the diaphragm layer (5) is introduced into these recesses (6), and in which this sealing layer (7) does not cover the side of the diaphragm averted from the hollow (4).

3. Pressure sensor according to one of Claims 1 or 2, in which the diaphragm layer (5) is polysilicon.

4. Pressure sensor according to one of Claims 1 or 2, in which the diaphragm layer (5) is metal.

5. Pressure sensor according to one of Claims 1 to 4, in which the electrode layer (8) is formed by one or more metal layers.

6. Method for producing a pressure sensor according to one of Claims 1 to 5, having the following steps:
a) a layer (3) provided for producing the hollow (4) is produced above a doped region (2) and the diaphragm layer (5) is applied thereto;
b) a mask is used to produce in this diaphragm layer (5), in the region of the diaphragm to be produced, recesses (6) of a size dimensioned for the following steps c) and d);
c) a hollow (4) is etched out in the layer (3) provided therefor by using these recesses (6);
d) a sealing layer (7) is applied to the diaphragm layer (5) in such a way that the recesses (6) are sealed without the hollow (4) being filled up;
e) the electrode layer (8) is applied and provided with the openings (9);
f) using these openings (9), material present between the diaphragm layer (5) and the electrode layer (8) is etched away in the region of the diaphragm to be produced, and the means required to apply a voltage to the diaphragm layer (5) and the electrode layer (8) are produced.

7. Method according to Claim 6, in which the diaphragm layer (5) is produced from polysilicon in step a), and dopant is implanted in a following step in order to render the diaphragm layer (5) electrically conductive.

8. Method according to Claim 6 or 7, in which a spacer layer is applied between steps d) and e), and this spacer layer is etched away in step f) in the region of the diaphragm to be produced.

## Revendications

1. Détecteur de pression en tant que composant semi-conducteur,
dans lequel il existe une cavité (4) qui est limitée, sur un côté, par une membrane (12) formée essentiellement par une couche de membrane (5) électroconductrice,
dans lequel il existe une zone dopée (2) électroconductrice sur le côté de la cavité (4) éloigné de la membrane,
dans lequel il existe, sur le côté de cette membrane éloigné de cette cavité (4), et à distance de cette membrane, une couche d'électrode (8) électroconductrice,
dans lequel cette couche d'électrode (8) est percée d'ouvertures (9),
dans lequel ces ouvertures (9) sont pratiquées et cette membrane peut être déformée de manière à ce que, en cas de modification, à l'intérieur d'un intervalle prédéterminé, d'une pression régnant dans un milieu sur le côté de cette couche d'électrode (8) éloigné de cette cavité (4), on puisse mesurer la modification d'une tension électrique appliquée, par le biais de connexions électriques, à cette couche de membrane (5) et cette couche d'électrode (8) ou à cette zone dopée (2), laquelle tension est nécessaire pour obtenir une réaction électrostatique s'opposant à une déformation de cette membrane, et
dans lequel il existe des contacts pour les connexions électriques de cette couche de membrane (5), de cette couche d'électrode (8) et de la zone dopée (2).

2. Détecteur de pression selon la revendication 1,
dans lequel cette couche de membrane (5) est pourvue, dans la région de cette membrane (12), d'évidements (6) qui coupent à chaque fois les deux surfaces de cette couche de membrane (5),
dans lequel le matériau d'une couche d'obturation (7) appliquée sur la couche de membrane (5) est introduit dans ces évidements (6) et
dans lequel cette couche d'obturation (7) laisse libre le côté de la membrane éloigné de la cavité (4).

3. Détecteur de pression selon l'une des revendications 1 ou 2, dans lequel la couche de membrane (5) est en polysilicium.

4. Détecteur de pression selon l'une des revendications 1 ou 2, dans lequel la couche de membrane (5) est en métal.

5. Détecteur de pression selon l'une des revendications 1 à 4, dans lequel la couche d'électrode (8) est formée par une ou plusieurs couche(s) métallique(s).

6. Procédé de fabrication d'un détecteur de pression selon l'une des revendications 1 à 5, comprenant les étapes suivantes :
a) une couche (3) prévue pour la fabrication de la cavité (4) est fabriquée sur une zone dopée (2) et la couche de membrane (5) est appliquée par dessus ;
b) des évidements (6) sont réalisés dans cette couche de membrane (5), au moyen d'un masque, dans la région de la membrane à fabriquer, et ils ont une grandeur dimensionnée pour les étapes c) et d) qui suivent ;
c) une cavité (4) est creusée par gravure, en utilisant ces évidements (6), dans la couche (3) prévue à cet effet ;
d) une couche d'obturation (7) est appliquée sur la couche de membrane (5) de manière à ce que les évidements (6) soient obturés sans remplir la cavité (4) ;
e) la couche d'électrode (8) est appliquée et pourvue des ouvertures (9);
f) le matériau présent entre la couche de membrane (5) et la couche d'électrode (8) est éliminé par gravure, en utilisant ces ouvertures (9), dans la région de la membrane à fabriquer, et les moyens nécessaires pour l'application d'une tension électrique à la couche de membrane (5) et à la couche d'électrode (8) sont fabriqués.

7. Procédé selon la revendication 6, dans lequel, dans l'étape a), la couche de membrane (5) est fabriquée en polysilicium et dans une étape suivante, on procède à l'implantation d'une matière de dopage pour rendre la couche de membrane (5) électroconductrice.

8. Procédé selon l'une des revendications 6 ou 7, dans lequel entre les étapes d) et e), on applique une couche d'espacement et dans l'étape f), cette couche d'espacement est éliminée par gravure dans la région de la membrane à fabriquer.
